# EUROPEAN PATENT SPECIFICATION

(11) **EP 3 148 317 B1**
(45) Date of publication and mention of the grant of the patent: **22.08.2018**
(21) Application number: 15732480.7
(22) Date of filing: 29.05.2015
(51) Int. Cl.: A01G 24/44, A01G 9/08, A01C 7/00, A01C 21/00, A01G 9/029, A01G 24/28

(54) **PLANTING METHOD MAKING USE OF A SUBSTRATE PLUG WITH A PRESS SECTION**
PFLANZVERFAHREN UNTER VERWENDUNG EINES SUBSTRATSTECKERS MIT EINER PRESSPARTIE
PROCEDE DE CULTURE METTANT EN OEUVRE UNE MOTTE SUBSTRAT AVEC UNE SECTION DE PRESSAGE

(30) Priority: 30.05.2014 NL 2012923; 01.08.2014 NL 2013289
(43) Date of publication of application: 05.04.2017
(73) Proprietor: Anthura B.V., 2665 KV Bleiswijk (NL)
(72) Inventor: VAN DER KNAAP, Mark, 2665 KV Bleiswijk (NL); VERHOEF, Pim Matthijs, 2665 KV Bleiswijk (NL)
(74) Representative: EP&C
(86) International application number: PCT/NL2015/050386
(87) International publication number: WO 2015/183094

(56) References cited:
- EP-A1- 2 327 293
- EP-A1- 2 572 571
- EP-A2- 1 210 866
- WO-A1-95/09525
- GB-A- 1 054 671
- JP-A- 2005 006 502

## Description

The present invention relates to a method for planting out seeds for plants or plants themselves, also referred to as plant material, in particular seedlings, cuttings or tissue-culture plants, which method makes use of assemblies of containers and pre-shaped substrate plugs, of which the plugs are equipped with plant insertion recess into which the plant material can be planted.

A variety of such planting methods are known in the field. For example EP 2 327 293 shows a method in which the pre-shaped substrate plug comprises two distinctive semi-frustoconical shaped segments. The symmetrical segments are formed by mixing a fibre mixture, such as coconut fibre or peat with a heated thermoplastic material as adhesive, which is then moulded in a suitable mould. The two segments can be placed inside a basket for keeping them together. With this the segments lie with flat vertical walls against each other. Subsequently the basket can be placed inside a container of a tray. Before the two segments are placed in the basket and holder respectively, firstly roots of a plant are placed between the two segments.

A disadvantage of this method is that its user-friendliness leaves to be desired and that it is relative time-consuming. Also roots or leafs of the plants may get damaged or broken off during the planting out. For example this can be caused because the segments form fixed units, which fixed units may squeeze the roots when their flat vertical walls get clamped against them. Furthermore the plant may get damaged because a user is likely to be short-handed when trying to first carefully place the plant's roots between the two segments, then secondly keep those segments gently positioned relative to each other, and then thirdly have them correctly placed in the basket. As one can imagine this is a difficult operation to perform by merely one person.

Another example is known from GB 1,054,671. Here a square pre-shaped substrate plug is used which is made out of a spongy compressible material and which has a groove-shaped plant insertion recess which extends over the whole height of the plug. The groove-shaped plant insertion recess has one end located in a central portion of the plug and the other end opening out at one sidewall of the plug. After separating the edges of the groove-shaped plant insertion recess, a plant can be placed with its roots at a desired height therein. Subsequently the edges can be pinched together such that the plant is retained in the plug. After that the plug can be placed into a suitable container.

A disadvantage here also is that its user-friendliness leaves to be desired, and that the method is relative time-consuming and difficult to perform. Again the plants may get damaged during the planting out because a user is likely to be short-handed when trying to first separate the edges, then carefully place the plant's roots into the groove-shaped plant insertion recess, and then pinch the edges together and place the plug in the basket.

The present invention aims to overcome the abovementioned disadvantages at least partly or to provide a usable alternative. In particular the invention aims to provide a cost-efficient planting method which helps to positively influence the growing conditions for the plant and which can be largely automated by having it partly or wholly performed by a robot.

This aim is achieved by a method for planting out a seed for a plant or a plant itself according to claim 1. The method comprises the step of providing a pre-shaped substrate plug which is equipped with a substantially vertically extending plant insertion recess that opens out towards an upper surface of the plug. A container is provided for the plug to fit into. A seed or lower part of a plant is positioned inside the plant insertion recess, after which the plug is placed in an aimed insertion position into the container. According to the inventive thought the provided plug comprises one or more so-called press sections sideways of the plant insertion recess. Those press sections are delimited by outer walls which have dimensions that are larger than dimensions of corresponding parts of inner walls of the container. In other words the press sections are overdesigned relative to the corresponding container parts. During the step of placing the plug in the aimed insertion position into the container, a pressing of the plug into the container needs to be performed, since otherwise the overdesigned press sections would not fit into the corresponding container parts. Because of this pressing, the overdesigned press sections automatically get (com)pressed inwardly in a sideways direction and owing to this automatically start to decrease the plant insertion recess around the seed or lower plant part. This decreasing of the recess may be such that the recess substantially fully has closed around the seed or lower plant part and thus has the substrate material substantially lie all around against the seed or lower plant part. The decreasing of the recess however may also be such that the recess has become smaller but that a limited amount of play remains around at least a part of the seed or lower plant part. Furthermore the decreasing of the recess may be such that the seed or lower plant part at least partly has gotten clamped by the plug's substrate material, without the recess having gotten fully closed all around the seed or lower plant part.

This advantageously makes it possible to quickly and easily place the seed or the plant with its lower part into the plug and have it retained in the aimed insertion position therein. Thus an important cost saving can be obtained. The plant insertion recess can remain open as long as the plug has not been fully pressed into the container. No additional measures need to be taken for this. Subsequently the plant insertion recess can automatically start to decrease, substantially in the sideways direction, by pressing the plug into the container. This pressing can still be performed manually if desired with for example merely one hand. One can pick up the seed or plant, place it into the plant insertion recess and then, if desired with the same hand, press the plug fully into the container. It is also possible to have this done by a robot arm or the like. The easy manual or robotized operation helps to keep the vulnerable seed or plant undamaged during the planting out. It is now obtained that the plant insertion recess gets to automatically and substantially come to lie against the seed or lower plant part as soon as the plug is fully pressed into the container. This causes the seed or lower plant part to get gently contacted by the substrate material, which helps for the plant to quickly start to grow inside the substrate material, and take up water and nutrients. In particular for seedlings, cuttings or tissue-culture plants, this may help them to quickly grow into strong and healthy plants.

The plant material can be placed directly into the recess such that it comes to lie directly against and gets retained by the walls thereof. It is however also possible for the plant material to come to lie indirectly against those recess walls by the plant material being be pre-placed in an auxiliary organ that is designed to get positioned between and retained by the recess walls of the plug. The sub-assembly of the plant material together with its auxiliary organ in which it has been pre-placed, then can get placed manually or automated inside the recess and suitably retained by the recess walls as soon as the recess has been forced to decrease. The auxiliary organ for example can be formed by a dissolvable packaging for the seed, or by a sub-plug inside which the plant material is already growing or by a netting that helps to keep roots of the plant together.

It is possible to first perform the step of positioning of the seed or the plant with its lower plant part inside the plant insertion recess, and not before then take up the substrate plug and place it into the container including a pressing of its press sections into this container. In a preferred embodiment it is however also possible to perform those steps in one go, preferably in one continuous downwards movement. The seed or plant can be moved downwards with the entire seed or merely the lower plant part into the plant insertion recess, until the seed or lower plant part has obtained its foreseen depth therein. Immediately thereafter it is possible to start to exert a downwards pressing force onto the upper surface of the plug such that it gets pressed into the container while at the same time its plant insertion recess starts to decrease.

In a further preferred embodiment, the plug can be pre-placed partly with a lower plug part into an upper part of the container, before the seed or plant with its lower plant part gets positioned inside the plant insertion recess. This can easily be done since the overdesigned press sections automatically may prevent the plug from starting to sink down towards the aimed insertion position inside the container. Instead the plug shall automatically remain to hang in an intermediate position inside the container in which the plug is still interspaced from a bottom of the container.

The press sections can be given all kinds of shapes and dimensions. Preferably they are formed as ribs which project locally outwardly bulging out of the outer plug wall and which extend substantially in a substantially vertical/axial direction alongside the outer wall of the plug. More preferably such locally outwardly bulging ribs are provided at opposing positions relative to the plant insertion recess. It is however also possible for merely one press section to be provided which extends around substantially the entire circumference of the plug at a larger dimension than the corresponding container part where it needs to be pressed into. Instead of the plug being provided with one or more outwardly projecting thickened press sections, or in addition thereto, it is also possible to equip the container with inwardly projecting press wall segments which cause the press sections to be compressed when the plug is pressed into the container.

The plug and the container can be given all kinds of shapes and dimensions. Preferably they are designed such that the plug is able to remain hanging, with its press sections still in a substantially uncompressed state, in the abovementioned intermediate position inside the container. For example the plug with the exception of its overdesigned press sections and the entire container can be made frusto-conical with circumferential outer plug wall and inner container wall which taper under same angles relative to the vertical/axial direction.

In a variant the provided container may delimit a shape such that the plug fits with its press sections in a non-compressed state therein in a first rotational position and that the plug fits with its press sections only in a compressed state therein in a second rotational position which corresponds to the aimed insertion position. This advantageously makes it possible to firstly pre-shape the substrate plug inside the container, for example by moulding it therein. Subsequently the thus pre-shaped plug can be moved at least partly out of the container and rotated from the first rotational position to the second rotational position. Then the further method steps according to the invention can be followed, that is to say, position the seed or lower part of the plant inside the plant insertion recess, and press the plug, which still is in its second rotational insertion position, into its aimed insertion position inside the container while the press sections automatically get compressed inwardly in the sideways direction and force the plant insertion recess to decrease around the seed or lower plant part. Thus the plug can be manufactured inside the same container where it subsequently gets pressed into. Only a partial rotation around its central axis is needed.

In a variant the provided pre-shaped substrate plug may comprise at least one reinforcement element with opposite segments which lie at opposing sides of the plant insertion recess. During the step of pressing of the plug into the container, the reinforcement element then gets deformed from a first "open" towards a second "closed" position together with the inwards compressing of the press sections. In this second position the opposite segments of the reinforcement element, like the press sections of the plug, come to lie closer towards each other in a sideways direction compared to in the first position. Thus the reinforcement element advantageously may help to maintain the integrity of the plug and in particular of the press sections lying opposite the plant insertion recess. Owing to the reinforcement the plug gets less vulnerable and is less likely to break in pieces during handling and processing. In particular the opposite segments of the reinforcement element make the plug less likely to break into pieces at the somewhat fragile location of the upwardly open plant insertion recess during the forced pressing of the plug with its oversized press sections into the container.

In a further variant the reinforcement element may get plastically deformed or locked such that the element is able to substantially maintain its second position after having been deformed thereto. When the oversized plug is removed again from the container, this may help to prevent that the plug returns to its original shape, that is to say back to its first position in which the press sections decompress outwardly in the sideways direction and in which the plant insertion recess at least partly increases again around the seed or lower plant part. By helping to keep the plug substantially in its compressed state, that is to say with the reinforcement element substantially in its second position even after the plug has been partly or wholly removed from out of the container again, further handling and processing of the plug and the seed or plant placed therein remains easier.

Further advantageous embodiments of the method are stated in the dependent subclaims.

The invention also relates to an assembly of a pre-shaped substrate plug and a container for use in the above inventive method.

In a preferred embodiment of this assembly, a difference between the outer wall dimensions of the press sections of the plug and the inner wall dimensions of the corresponding parts of the container can be made equal to or larger than thicknesses of the plant insertion recess to be decreased. Thus it can be tuned that the plant insertion recess gets to decrease over an aimed amount, in particular at least 3 mm, and for example starts to substantially close itself around the seed or lower plant part and/or starts to clamp around it. The larger the plant insertion recess is made, the more overdesigned the press sections can be made. The dimensions of the still open plant insertion recess are such that it is well able to take up the seed or lower plant part. The dimensions of the overdesigned press sections can be made complementary thereto. This may differ per type of plant which needs to be planted out. In this way an optimal cooperation between the numbers, dimensions and shapes of the press sections and the shape and dimension of the plant insertion recess can be made.

In a further embodiment the plant insertion recess may even be given a varying thickness over its height and/or width inside the plug. For example its thickness can decrease gradually and/or stepped towards the sides and/or towards the bottom of the plant insertion recess, since less seed or lower plant part volume may have to come to lie therein during the planting out. Again the dimensions of the overdesigned press sections can easily be made complementary thereto.

The press sections preferably may be delimited by downwards, that is to say substantially in the axial direction of the plug, tapering outer walls. This provides a sideways inwardly directed wedge action onto the press sections when they are pressed downwards into the container, which makes it lighter to suitably press the plug into the container after the seed or lower plant part has been placed therein.

The plug may comprise an upper and lower plug part, wherein the press sections extend merely along the upper plug part, and wherein the lower plug part has outer wall dimensions which are equal to or smaller than inner wall dimensions of a corresponding lower part of the container. The lower plug part then can easily be pre-placed, preferably with a circumferential play, into an upper part of the container, whereas the upper plug part with its overdesigned press sections automatically gets to hang above this upper container part. It is possible to have the entire upper plug part form the press section. A transition between the outer walls of the upper and lower plug parts then can be made discontinuous. For example the plug then can be given a stepped outer wall. It is then also possible to make this transition more gradual, and for example have the outer walls of the lower plug part taper at a smaller angle α relative to the axial/vertical direction than an angle β at which the outer walls of the upper plug part taper relative to the axial/vertical direction. It is however also possible to have the upper and lower plug parts, including or excluding the press sections, taper at same angles, and equip the container with such a slender upper part that the plug still gets compressed at the location of its upper part when pressed into the container.

As follows from the above, the plant insertion recess into which the seed or lower plant part needs to be inserted, may have all kinds of shapes and dimensions. For example it can be a cylindrical or (frusto)conical recess, or a cross-shaped or star-shaped recess. It may however also be groove-shaped and extend over the entire width of the upper plug part and thus divide this upper plug part into two segments. In this last variant, the two segments of the upper plug part which lie on opposite sides of the plant insertion recess, then can remain hingedly connected with each other by means of the lower plug part. This makes it possible for the upper plug part segments to hinge towards a decreased position when the plug is pressed into the container.

It is also possible for the plug to be provided with more than one plant insertion recess. This makes it possible to plant two or more seeds or plants at a same time in respective recesses of one and the same plug. Such plural recesses then may lie interspaced of each other, for example in a substantially parallel direction.

The pre-shaped substrate plug advantageously is not made as a rigid object but gets to be made compressible and be plastically or elastically deformable. This makes it possible to have its overdesigned press sections deform such during its pressing into the container that the substrate material of the plug that delimits the plant insertion recess gets forced to substantially plastically or elastically decrease around the seed or lower plant part. When made out of plastically deformable material, the substrate advantageously is able to remain its compressed state after it has been pressed into the container. For example the plug can be made out of compressible flexible substrate material which has been glued together by means of a suitable adhesive.

In line with the respective one of the variants of the method described above, the provided plug in an advantageous embodiment may comprise one or more reinforcement elements with opposite segments which lie at opposing sides of the plant insertion recess. Thus, as indicated above, not only the oversized plug itself gets compressed with the inwards compressing of the press sections and the at least partly closing of the plant insertion recess when forced into the container, but also its reinforcement element gets deformed from the first "open" towards the second "closed" position. Together the substrate material and the reinforcement element help to maintain the integrity of the plug during its handling and processing.

In a further embodiment of this variant, the reinforcement element may have a V- or U-shape. Upwardly projecting legs of this V- or U-shape then may form the opposite segments which lie at opposing sides of the plant insertion recess. The curved or sharp pointed lower connection between the legs then may advantageously form a sort of hinge along which the legs may rotate inwardly from their first towards their second position.

Preferably, the opposite segments may extend over substantially the entire height of the plant insertion recess. Thus they are maximally able to reinforce the most vulnerable parts of the plug which lie adjacent the recess.

The reinforcement element may at least partly be connected to or embedded inside the substrate material of the plug. Thus the substrate material and the reinforcement element are well able to move along with each other and transmit forces to each other during such movements.

For this the reinforcement element can be pre-shaped along with the substrate plug, for example by placing it at a suitable position inside a production mould before having the substrate material placed therein and formed into the pre-shaped plug. Together with the substrate material a suitable adhesive then can be added such that after hardening an integrally connected plug assembly of substrate material and reinforcement element is obtained.

In the alternative the reinforcement element can also be introduced afterwards into the pre-shaped substrate plug after manufacturing. If for example the reinforcement element is formed by a V- or U shaped bar or wire, then it is also possible to pierce it with its upwardly projecting legs from below into the plug's substrate material, such that its legs get at least partly positioned along the aimed opposing sides of the plant insertion recess. The curved or sharp pointed lower connection between the legs then may come to lie at or against the lower bottom side of the plug.

It is also possible to have the reinforcement element lie wholly or partly against the outer circumference of the pre-shaped plug, in particular with its opposite segments lying against the outer sides of the press sections. Thus also the opposite segments can be forced to move from their first towards their second position during the pressing of the oversized plug into the container. For example the reinforcement element can then also get connected to the plug's substrate material, by means of a suitable adhesive or the like. The reinforcement element however can also be made such that it is comes to lie freely against the outer side of the plug with its opposite segments lying against the press sections. As long as the reinforcement element is form-stabile, and for example plastically deformable, it then is also well able to help maintain the plug's integrity and prevent it from returning back towards its decompressed state after being removed from the container again.

The reinforcement element can be made out of all kinds of materials, for example plastic or metal. It can be made out of elastically deformable material. The plug, including its press sections and reinforcement element, is then able to return to its original decompressed position as soon as it is removed again out of the container.

In a preferred embodiment, however, the reinforcement element is at least partly made out of a plastically deformable material, in particular metal, such that it is able to maintain the opposite segments in their second position in which they lie closer to each other after the plug including its reinforcement element has been pressed to fit into the container. Thus the plug is able to substantially maintain a compressed state owing to the reinforcement element maintaining its second position, even when the plug gets moved at least partly out of the container again.

In another embodiment the reinforcement element may comprise a locking mechanism between its opposite segments, such that it is able to maintain the opposite segments in the second position in which they lie closer to each other after the plug has been pressed to fit into the container. This locking mechanism for example may be integrated into a hinge which connects the opposite segments with each other and which is designed such that it can only rotate in one direction that is to say in the direction wherein the opposite segments move from the first towards the second position.

In a variant the plug can comprise a temporary blocking organ that extends at least partly inside the recess such that the recess is unable to close prematurely, that is to say before the plant material has actually been placed inside it. Such a temporary blocking organ for example can be formed by a bridging element that extends in a transverse direction over the recess and that is designed to get broken, removed, dissolved or pushed away during planting of the plant material inside the recess such that the recess immediately after removal or destruction of the temporary blocking organ can be forced to move from its "open" towards its "closed" position.

Further advantageous embodiments of the assembly are stated in the dependent subclaims.

The invention also relates to a pre-shaped substrate plug for use in the method and assembly.

The invention shall now be explained in more detail with reference to the accompanying drawings, in which:
- Fig. 1 shows an embodiment of the pre-shaped plug according to the invention in a non-compressed state;
- Fig. 2a-b show a perspective and cross-sectional view of an assembly of the pre-shaped plugs of fig. 1 and a tray of containers during a planting operation;
- Fig. 3 shows the pre-shaped plug of fig. 1 in a compressed state;
- Fig. 4a-b are views similar to fig. 2a-b with a variant of the pre-shaped plug;
- Fig. 5-8 show variants of assemblies of pre-shaped plugs and containers in a non-compressed and compressed state;
- Fig. 9a-d shows an assembly of a further variant of an assembly of plug and container in four stages of a planting operation;
- Fig. 10 shows a variant of fig. 1 with reinforcement elements;
- Fig. 11 is a view according to fig. 2b of the variant of fig. 10;
- Fig. 12-15 shows the variants of fig. 5-8 including various types of reinforcement elements;
- Fig. 16a-c shows three planting stages of a variant with planting material already being growing inside an auxiliary plug organ (without the container being shown);
- Fig. 17 shows a variant of the plug having two recesses; and
- Fig. 18 shows a variant of the plug having a blocking organ inside its recess.

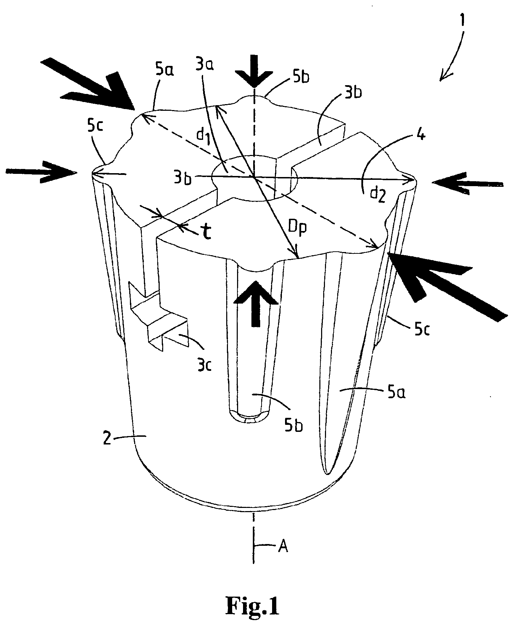

A pre-shaped substrate plug has been given the reference numeral 1 in fig. 1. This plug 1 is made out of flexible compressible substrate material. It has a central axis A and a substantially frusto-conical outer wall 2. A recess 3 for a seed or plant to be inserted into, has been provided in an upper part of the plug 1. This recess 3 comprises a cylindrical central hole section 3a, two vertically extending groove sections 3b, and a horizontally extending groove section 3c. The recess 3 opens out with the hole and groove sections 3a, 3b towards an upper surface 4 of the plug 1. The grooves 3b and 3c extend over the entire width of the plug 1 and thus open out towards the outer wall 2.

The plug 1 comprises three pairs of press sections 5a-c which are provided at diametrically opposite positions relative to the recess 3. Each of the press sections 5 is formed as an elongate tapering rounded rib which projects outwardly bulging from the wall 2. The press sections 5 extend downwards along the outer wall 2 while gradually tapering towards the same diameter as the outer wall 2. Outer wall dimensions d1, d2 of the press sections 5 are larger than the diameter Dp of the frusto-conical outer wall 2. How much larger depends on the height along the plug 1. The maximum differences between D and d1, d2 are designed to be larger than the thickness t of the groove sections 3b.

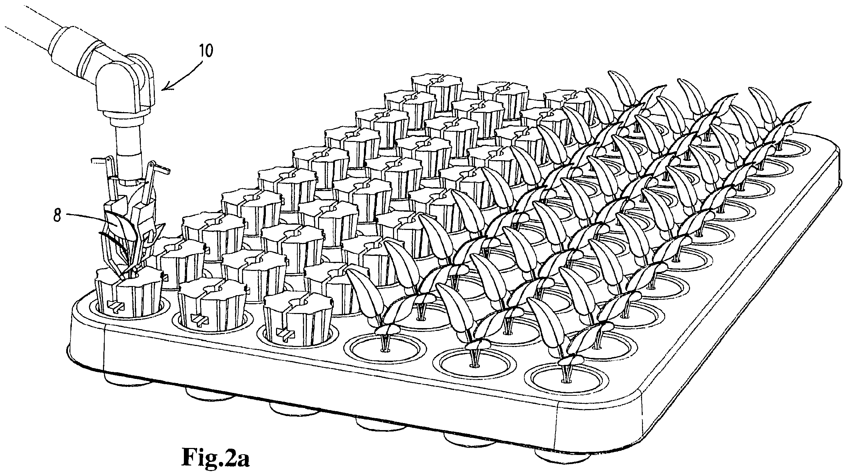

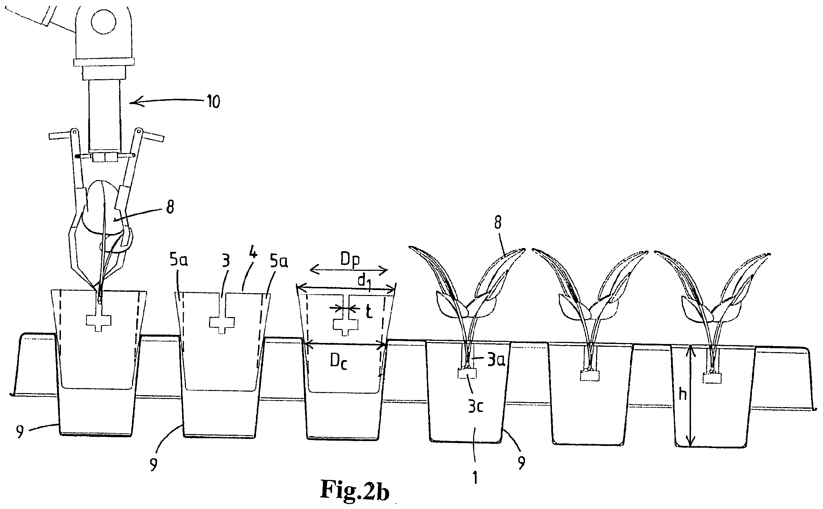

Fig. 2 shows how a number of the plugs 1 can used for planting out plants 8 in containers 9 of a tray. With this each container 9 delimits a frusto-conical container space that is substantially complementary to the frusto-conical outer plug wall 2, that is to say the container 9 has a gradually downwardly decreasing inner diameter Dc which substantially corresponds to the gradually downwardly decreasing diameter Dp of the plug 1. Furthermore the container 9 and the plug 1 here have been designed with substantially same heights h.

The assembly of plugs 1 and containers 9 can now advantageously be used as follows:
Firstly the plugs 1 are pre-placed partly with their lower plug parts into upper parts of the containers 9. This is referred to as an intermediate plant positioning position. With this the press sections 5 get to lie against upper edges of the containers 9, while the recess 3 is still fully open.

Subsequently a robot arm 10 each time picks up a plant 8 and carefully and gently moves this plant 8 with a lower part into the open recess 3 of one of the plugs 1. Then in one continuous go the robot arm 10 starts to exert a downwards pressing force onto the upper surface 4 of this plug 1. This causes the plug 1 to get entirely pressed into its container 9. Since the press sections 5 are overdesigned relative to the corresponding upper part of the container 9, they are forced to progressively compress radially inwardly. Because of this the recess 3 automatically starts to progressively close or otherwise decrease around the lower part of the plant 8 and starts to firmly grip this lower plant part 8.

As soon as the entire plug 1 has been pressed into its container 9 it has reached its aimed insertion position therein, in which a lower surface of the plug 1 lies against a bottom of the container 9. The robot arm 10 then can be moved away and pick up another plant 8 for placing it into another one of the plugs 1.

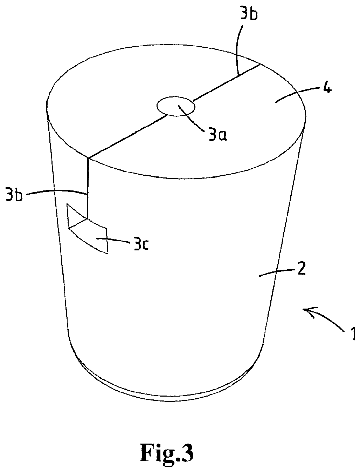

Fig. 3 shows the plug 1 without the plant 8 and the container 9 in its compressed state. As can be seen there, the vertical groove sections 3b have fully closed whereas the dimensions of the central hole section 3a and of the horizontal groove section 3c have decreased. This is advantageous because the varying shape of the recess 3, on the one hand results in the plant 8 getting firmly gripped, whereas on the other hand a vulnerable center part of the plant 8, where the leaves originate, does not get fully squeezed. At the same time the sideways opening groove section 3c remains open for roots to quickly start to grow into there. This may for example be advantageous for aerial roots of epiphyte plants to grow into.

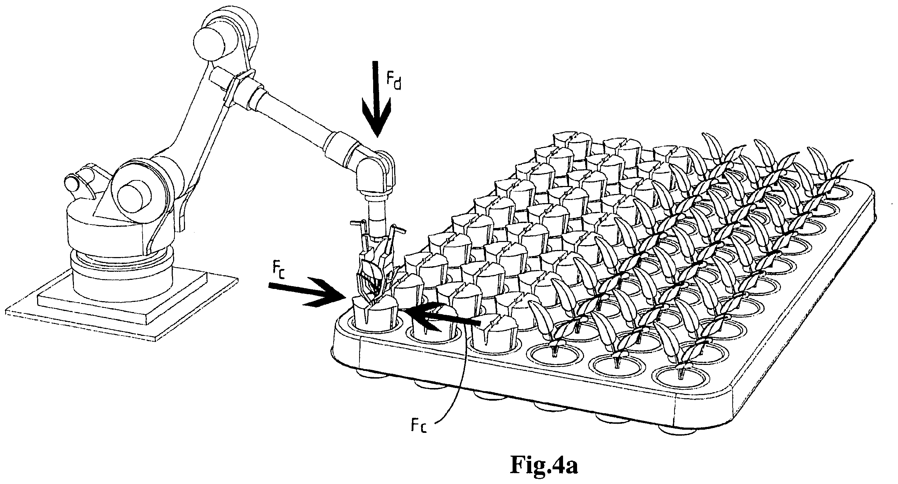

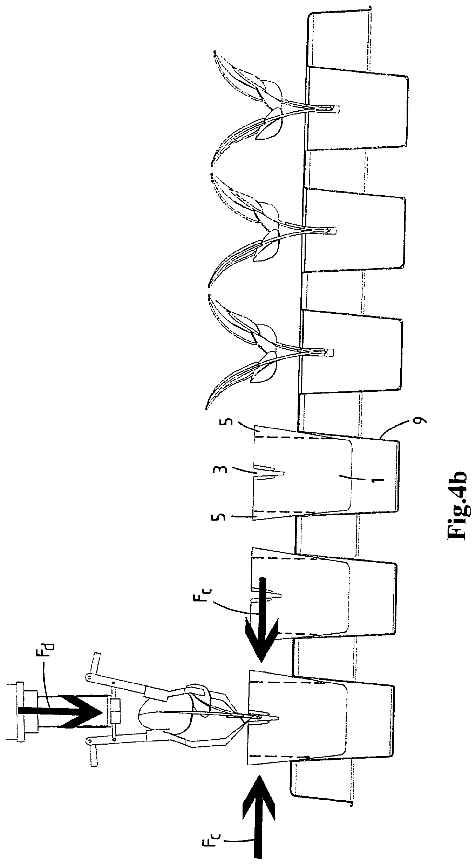

Fig 4 shows a variant in which the plug 1 only comprises one set of opposing press sections 5. Furthermore, this time the recess 3 is formed by a simple wedge-shaped groove which extends over the entire width of the plug 1. Now also the advantageous cooperation between the containers 9 and the plugs 1 can be obtained, in that the recesses 3 automatically shall be forced to close or otherwise decrease when the plugs 1 get pressed into the containers 9. In fig. 4 the downwards directed pressing force is indicated with Fd, whereas the resulting sideways inwards directed compressing forces are indicated with Fc.

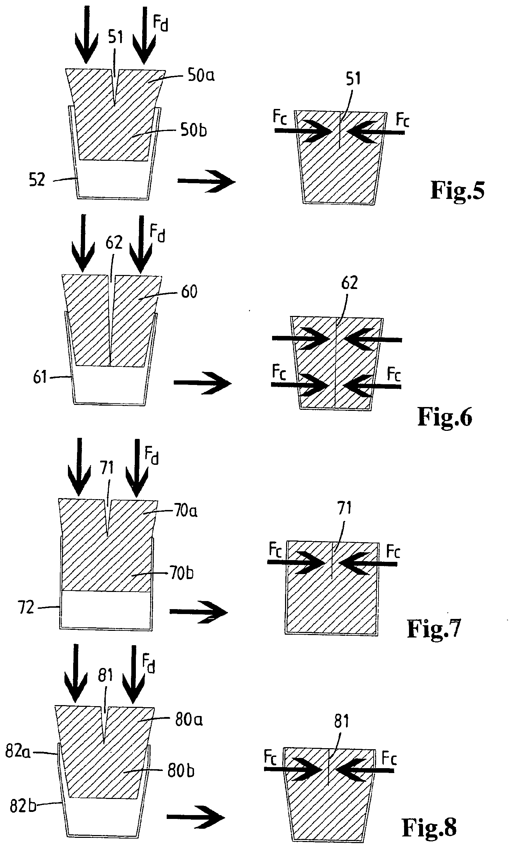

Fig. 5 shows a variant with a plug 50 with an upper plug part 50a and a lower plug part 50b. A plant insertion recess 51 has been provided inside the upper plug part 50a. The lower plug part 50b has been given a frusto-conical shape of which outer walls taper at a first angle. The upper plug part 50a has been given a frusto-conical shape of which outer walls taper at a second angle which is larger than the first angle. Thus the entire upper plug part 50a forms a press section according to the inventive thought. When the plug 50 gets pressed with a downwards directed force Fd into a frusto-conical container 52 which is complementary to the lower plug part 50b, then resulting radially inwards directed compressing forces Fc between the upper plug part 50a and corresponding upper parts of the container 51 shall occur. Those forces Fc shall force the recess 51 to close or otherwise decrease. With this the lower plug part 50b is able to function as a sort of hinged connection for the two segments of the upper plug part 50a.

Fig. 6 shows a variant with a two-part plug 60 and a container 61 which are both made frusto-conical with circumferential outer plug walls and inner container walls which taper under different angles relative to the vertical direction. Since the plug 60 tapers at a larger angle than the container 61, the largest part of the plug 60 now is able to act as the overdesigned press section. As can be seen, a plant insertion recess 62 here also extends over substantially the entire plug height. The plug 60 now can be dropped down into the container 61 and automatically shall remain to hang therein in an intermediate position in which the recess 62 is still open. When subsequently pressed forcedly down further into the container 61, the plug 60 shall be able to reach its aimed end position therein in which it gets to contact the bottom of the container 61. During this pressing down, the entire plant insertion recess 62 automatically shall start to close or otherwise decrease around for example plant's roots placed therein (not shown).

Fig. 7 shows a variant with a plug 70 with an upper plug part 70a and a lower plug part 70b. A plant insertion recess 71 has been provided inside the upper plug part 70a. The lower plug part 70b has been given a cylindrical shape. The upper plug part 70a has been given a upwards outwardly tapering frusto-conical shape. Thus the entire upper plug part 70a forms a press section according to the inventive thought. When the plug 70 gets pressed with a downwards directed force Fd into a cylindrical container 72 which is complementary to the lower plug part 70b, then resulting radially inwards directed compressing forces Fc between the upper plug part 70a and corresponding upper parts of the container 72 shall occur, which shall force the recess 71 to close or otherwise decrease.

Fig. 8 shows a variant with a plug 80 with an upper plug part 80a and a lower plug part 80b. A plant insertion recess 81 has been provided inside the upper plug part 80a. The entire plug 80 has been given a frusto-conical shape. This time a container 82 is used which comprises an upper cylindrical section 82a and a lower frusto-conical section 82b. The lower frusto-conical container section 82b is complementary to a corresponding lower section of the plug 80. The upper plug part 80a here forms the press section. When the plug 80 gets pressed with a downwards directed force Fd into the container 82, then again resulting radially inwards directed compressing forces Fc between the upper plug part 80a and the corresponding upper section 82 a of the container 82 shall occur, which shall force the recess 81 to close or otherwise decrease.

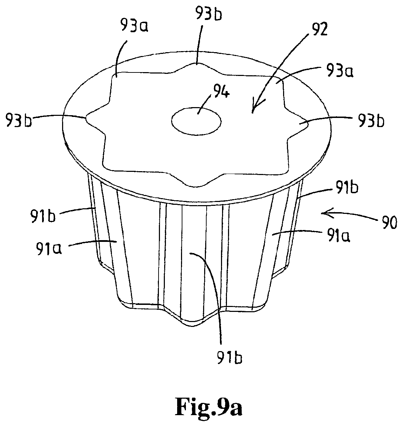

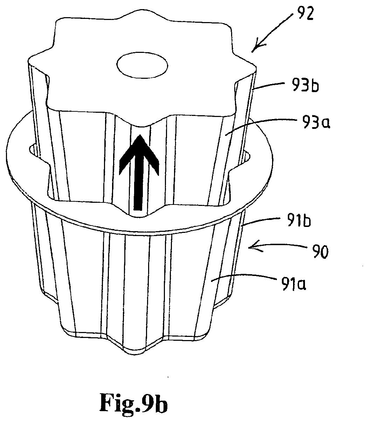

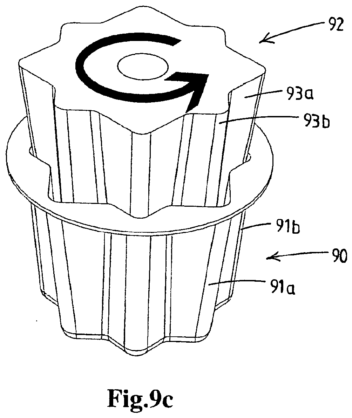

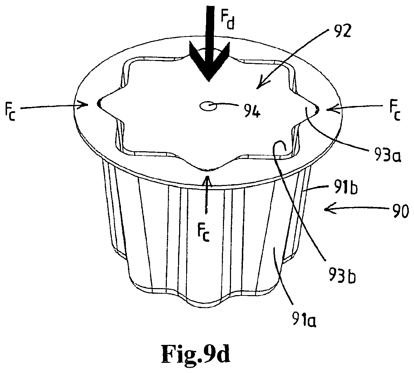

Fig. 9 shows a variant in which a container 90 comprises a different dimensioned first and second set of vertically extending grooves 91a and 91b. The first set of grooves 91a has larger outer dimensions d1 than the outer dimensions d2 of the second set of grooves 91b.

Fig. 9a shows a first method step in which a plug 92 is moulded or otherwise pre-shaped inside this container 90. The plug 92 then gets to comprise a complementary different dimensioned first and second set of vertically extending ribs 93a and 93b of which the first set of ribs 93a has larger outer dimensions than the second set of ribs 93b. During or after the moulding the plug 92 is provided with a plant insertion recess 94, which here is formed as a cylindrical hole.

Fig. 9b shows a second method step in which the thus pre-shaped plug 92 is lifted out of the container 90. This position of the plug 92 is referred to as its first rotational position.

Fig. 9c shows a third method step in which the lifted plug 92 is rotated around its central axis such that the first set of larger dimensioned ribs 93a gets positioned above the second set of smaller dimensioned grooves 91b. This position of the plug 92 is referred to as its second rotational position. The first set of larger dimensioned ribs 93a then is able to form the press sections according to the invention which only are able to fit into the second set of smaller dimensioned grooves 91b when they are forced to compress sideways inwardly during a pressing of the plug 92 into the container 90.

Fig. 9d shows a fourth method step in which the plug 92 has been pressed with a downwards directed force Fd into the container 90. This results in radially inwards directed compressing forces Fc between the ribs 93a of the plug 92 and the grooves 91b of the container 90. This shall force the recess 94 to reduce its diameter. At the same time, in this aimed insertion position, the second set of smaller dimensioned ribs 93b have no problem to move into the first set of larger dimensioned grooves 91a.

With this variant it is possible to manufacture and use the plugs for planting out in one and the same container. It also may help to prevent pre-shaped plugs from getting damaged during transport towards a planting location.

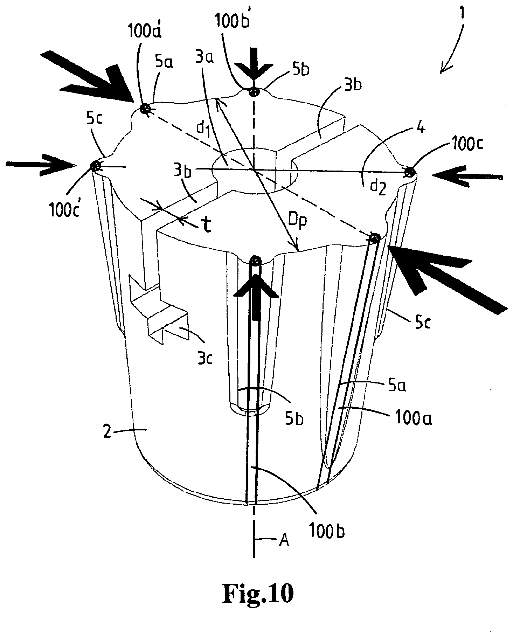

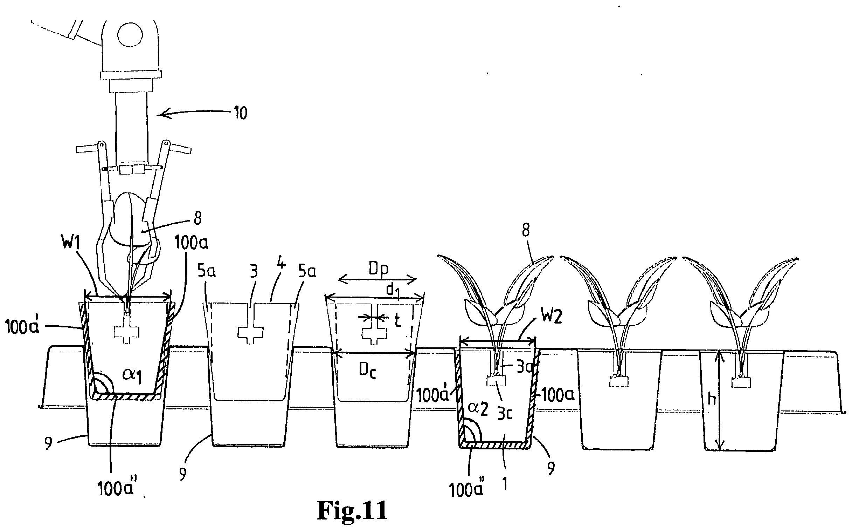

Fig. 10 and 11 show the option to equip the plug of fig. 1 with a plurality of three U-shaped metal wire reinforcement elements 100. The elements 100 comprise pairs of upwardly projecting opposite legs 100a-100a', 100b-100b' and 100c-100c', which lie diametrically opposed of each other on opposing sides of the plant insertion recess 3. Each pair of upwardly projecting opposite legs 100a-100a', 100b-100b' and 100c-100c' is connected to each other by means of a lying connection part 100a", 100b" and 100c". As can be seen each of the three reinforcement elements 100a, 100b, 100c is positioned such that it comes to lie with its legs 100a-100a', 100b-100b' and 100c-100c' against a corresponding one of the diametrically opposed sets of the press sections 5a, 5b, 5c.

The plurality of reinforcement elements 100 together may form a sort of open barred basket which lies against the outer sides of the plug 1. This can be achieved by connecting the distinctive elements 100 with each other for example at centres of their connection parts 100a", 100b" and 100c".

The elements 100 may get slightly clamped around the plug 1 such that they get to lie partly embedded therein and/or get adhered thereto so that they are able to form an effective interconnected unit with the plug's substrate material. The elements 100 advantageously reinforce the plug 1 such that no large parts of substrate material may easily break off during handling and processing, like for example the upper plug sections which together delimit the recess 3.

In the position as shown entirely on the left side of fig. 11, wherein the plug 1 hangs with its oversized press sections 5 above the container 9, the plug 1 does not have its press sections 5 compressed sideways inwardly yet. Likewise the reinforcement elements 100 are still in their first so-called "open" position. In this first position each leg 100a-100a', 100b-100b' and 100c-100c' encloses an angle α1 with its connection part 100a", 100b" and 100c". In this first position the upper free ends of the legs 100a-100a', 100b-100b' and 100c-100c' lie at a distance w1 of each other.

When subsequently the plug 1 gets pressed into the container 9, then the position as shown on the right side of the middle in fig. 11 is obtained, wherein the plug 1 has gotten its oversized press sections 5 compressed diametrically inwardly in order to fit inside the container 9. Likewise the reinforcement elements 100 have been pushed diamterically inwardly towards their second so-called "closed" position. In this second position each leg 100a-100a', 100b-100b' and 100c-100c' encloses an angle α2 with its connection part 100a", 100b" and 100c", which angle α2< α1. In this second position the upper free ends of the legs 100a-100a', 100b-100b' and 100c-100c' have come to lie at a distance w2 of each other, which distance w2<w1.

The reinforcement elements 100 are made out of such metal wire that they are plastically deformable. This causes them to get plastically deformed when forced to move into the container 9 together with the rest of the plug 1. This has the advantage that if the plug 1 after some time gets removed from the container 9 again, that the reinforcement elements 100 then help to keep the press sections 5 in their compressed state, which causes the plant insertion recess 3 to keep on clamping the plant 8 therein.

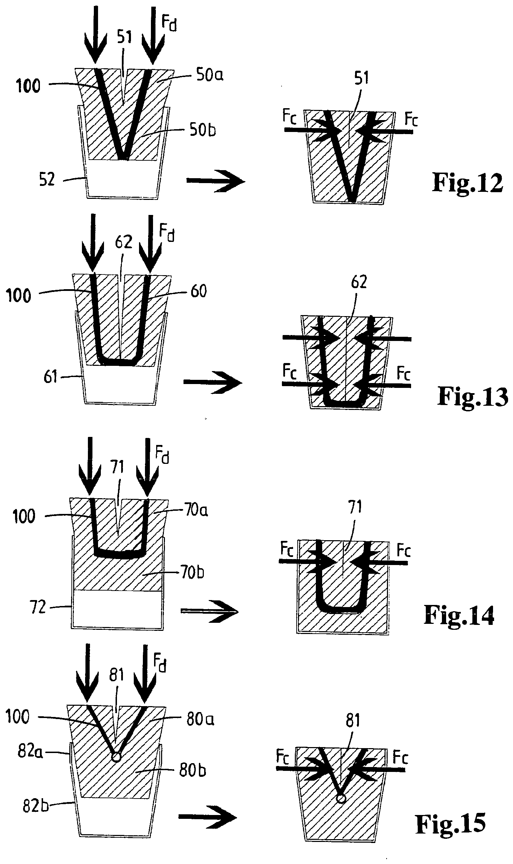

In fig. 12 a first variant of the reinforcement element 100 is shown. This time the element 100 is V-shaped, which has the advantage that the lower ends of the legs form a sharp pointed hinge. Furthermore it can be seen in fig. 12 that this time the element 100 has been fully circumvented by substrate material of the plug 50. Finally it is noticed that the legs of the element 100 extend over the entire height of the plug 50, including the height of the recess 51 therein.

In fig. 13 a second variant of the reinforcement element 100 is shown. This time the element 100 is U-shaped, which has the advantage that each entire upwardly projecting leg of the element 100 can lie embedded inside substrate material of its corresponding plug part. Here also the legs of the element 100 extend over the entire height of the plug 60, including the height of the recess 61 therein, which also extends over the entire height of the plug 60. This has the advantage that the element 100 connects the two plug parts with each other.

In fig. 14 a third variant of the reinforcement element 100 is shown. This time the element 100 is U-shaped and merely has its legs extend along an upper part of the height of the plug 70, which upper part includes the entire height of the recess 71 therein. In fig. 15 a fourth variant of the reinforcement element 100 is shown. This time the element 100 is V-shaped, in which the legs are connected to each other by means of a hinge. This hinge may be equipped with some kind of locking mechanism, like a ratchet, which only allows the legs to rotate towards each other and not away from each other again.

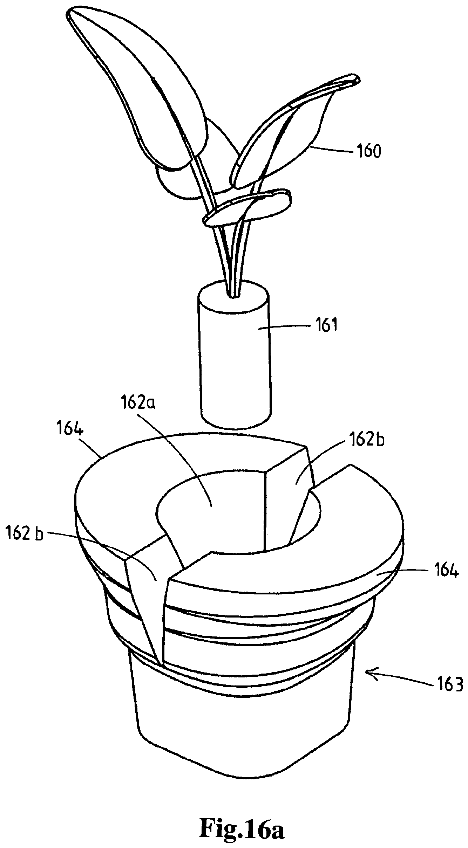

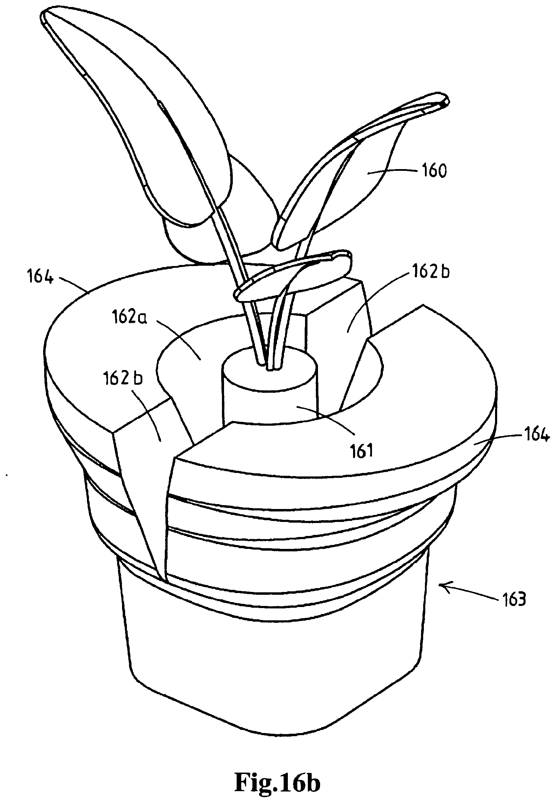

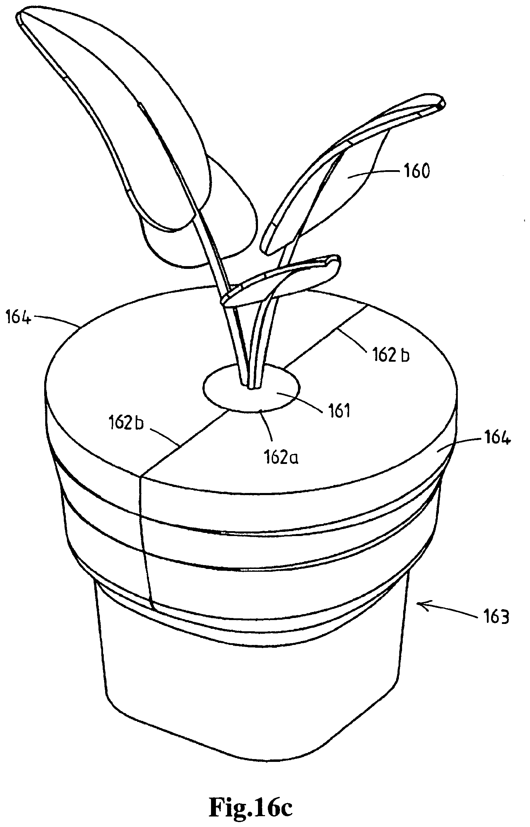

In fig. 16a-c a sub-assembly is shown of a plant 160 that is growing inside a cylindrical auxiliary plug organ 161. This sub-assembly is destined to be placed in a plant insertion recess 162 that is provided in a pre-shaped substrate plug 163. The plug 163 comprises press sections 164 of which outer wall dimensions, in the situation as shown in fig. 16a-b, are larger than inner wall dimensions of corresponding parts of a container that is not shown here. The recess 162 here comprises a frusto-conical central hole section 162a and two vertically extending groove sections 162b. The central hole section 162a is dimensioned such that the plug organ 161 can be freely placed therein, as is shown in fig. 16b. Then as a final step, as is shown in fig. 16c, the plug 163 gets pressed into a container that is dimensioned such that the press sections 164 need to be forced to fit into corresponding parts of the container while compressing radially inwardly and decreasing the recess 162 to narrowly fit around the sub-assembly of the plant 160 and auxiliary plug organ 161.

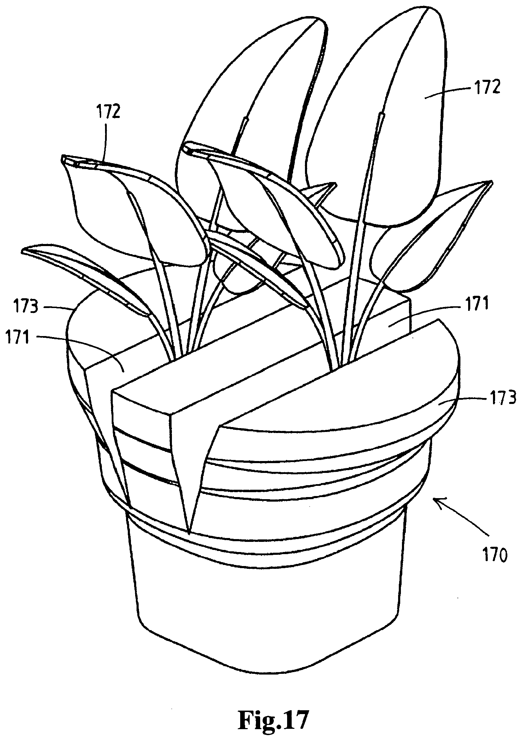

In fig. 17 a variant of a pre-shaped plug 170 is shown that is equipped with two interspaced parallel plant insertion recesses 171. This makes it possible to place two plants 172 with their lower parts inside the respective recesses 171. this can be done at a same time or one after the other. Subsequently the plug 170 can get pressed into a container (not shown here) that is dimensioned such that press sections 173 of the plug 170 need to be forced to fit into corresponding parts of the container while compressing radially inwardly and decreasing both recesses 171 at a same time such that they get to retain the plants 172.

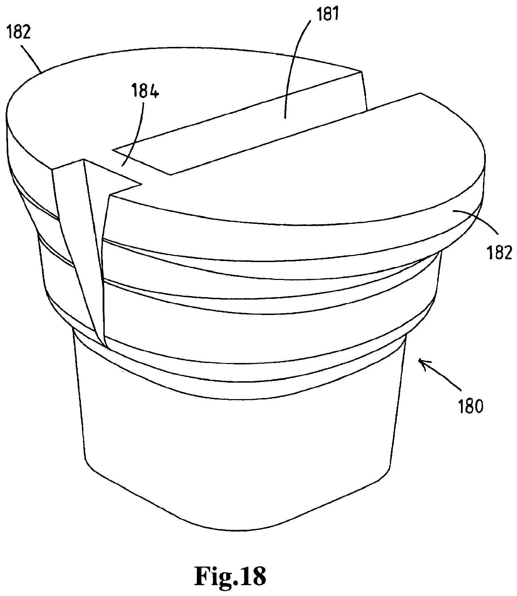

In fig. 18 a variant of a pre-shaped plug 180 is shown that is equipped with a plant insertion recess 181 between oversized/overdimensioned press sections 182 of the plug. Inside the recess 181a temporary blocking organ 184 is provided. The temporary blocking organ 184 here is formed by a bridging element or cross wall that extends inside the recess 181 in between the opposing plug recess walls that delimit the recess 181. The blocking organ 184 keeps the recess 181 open until it is forced to break. The blocking organ 184 is made out of the same and integral with the plug material. This destruction of the blocking organ 184 preferably is done simultaneously with a placing of plant material inside the recess and/or simultaneously with the plug getting forced to fit with its press sections 182 inside a container (not shown here).

Besides the embodiments shown, numerous variants are possible. For example the shapes and dimensions of the various parts, segments and sections of the container and/or plug can be further changed. The plug material can be very diverse and for example comprise coconut fibres, peat, bark, mineral/rock wool, soil, polyphenol foam, or mixtures thereof. This material can for example be pre-shaped or moulded while being glued together by means of a suitable adhesive. The plug can be made symmetrical or asymmetrical. Instead of the container and/or the plug being made out of one integral part it is also possible to use multi-part plugs and/or containers. For example some kind filling organ(s) like a ring can be placed inside an upper part of the container and/or around an upper part of the plug at the location of the press sections. This filling organ together with the press sections of the plug and the corresponding parts of the container, then also can be made such that an automatic decreasing of the recess is able to take place during pressing of the plug into the container. The plug can also be made out of two or more distinctive segments of which at least some are provided with the press sections and which together can be pressed into a container in such a way that a recess which is delimited by those plurality of segments automatically decreases. Also it is possible to use some kind of intermediate basket inside which the plug or plug segments can get placed before getting pressed together into the container. The container can have substantially closed side and/or bottom walls. It is also possible to use a basket as container of which the walls are provided with a plurality of openings. It is noted that aspects of the above variants of the reinforcement element(s) can also be combined with each other. For example hinges can also be used for the U-shaped variants. Further it is noted that the reinforcement element(s) may also be equipped with suitable profiles and/or cross or transverse pieces or the like such that they can get more grip onto the plug's substrate material and vice versa. Also it is noted that the other embodiments can also be provided with one or more reinforcement elements.

Thus the invention provides an easy to manufacture assembly of container and plug with relative large dimensioned press section(s) sideways of a plant insertion recess, which assembly makes it possible to truly speed up, improve and possibly fully automate a planting out process.

## Claims

1. A method for planting out a seed for a plant or a plant (8), in particular a seedling, cutting or tissue-culture plant, comprising the steps:
- providing a pre-shaped substrate plug (1) which is equipped with a substantially vertically extending plant insertion recess (3) that opens out towards an upper surface (4) of the plug (1);
- providing a container (9) for the plug (1) to fit into;
- positioning the seed or a lower part of the plant (8) inside the plant insertion recess (3); and
- placing the plug (1) in an insertion position into the container (9),
**characterized in that,**
the provided plug (1) comprises one or more press sections (5) sideways of the plant insertion recess (3), wherein outer wall dimensions (d1) of the press sections (5), in the insertion position, are larger than inner wall dimensions (Dc) of corresponding parts of the container (9), and
that during the step of placing the plug (1) in the insertion position into the container (9), a pressing of the plug (1) into the container (9) is performed for said press sections (5) to fit into the corresponding parts of the container (9) while said press sections (5) compress inwardly in a sideways direction and at least partly decrease the plant insertion recess (3) around the seed or lower plant part.

2. Method according to claim 1, wherein the step of positioning the seed or lower plant part inside the plant insertion recess (3) comprises a downwards moving of the seed or plant (8) into the plant insertion recess (3) which downwards moving is continued in one go with a downwards pressing action (Fd) exerted onto the upper surface (4) of the plug (1) for pressing the press sections (5) into the corresponding container parts and at least partly decrease the plant insertion recess (3) around the seed or lower plant part.

3. Method according to one of the preceding claims, wherein preceding the step of positioning the seed or lower plant part inside the plant insertion recess (3), the plug (1) is pre-placed partly with a lower plug part into an upper part of the container (9), with which the press sections (5) get supported in an uncompressed state by the corresponding parts of the container (9),
in particular wherein the provided plug (1) has said press sections (5) extend along an upper plug part (50a, 70a, 80a), and wherein during the pre-placing of the lower plug part (50b, 70b, 80b) into the upper part of the container (52, 72, 82), the upper plug part (50a, 70a, 80a), along which said press sections (5) extend, gets positioned above said upper part (52, 72, 82) of the container (9).

4. Method according to one of the preceding claims, wherein the provided container (90) delimits a space with a shape such that the plug (92) fits with its press sections (93) in a non-compressed state therein in a first rotational position and that the plug (92) fits with its press sections (93) in a compressed state therein in a second rotational position which corresponds to the insertion position,
the method further comprising the steps:
- pre-shaping the substrate plug (92) inside the container (90);
- moving the pre-shaped plug (92) at least partly out of the container (90);
- rotating the pre-shaped plug (92) from the first rotational position to the second rotational insertion position;
- positioning the seed or lower part of the plant inside the plant insertion recess (94); and
- pressing the plug (92) in the second rotational insertion position into the container (90) while said press sections (93) compress inwardly in the sideways direction and at least partly decrease the plant insertion recess (94) around the seed or lower plant part.

5. Method according to one of the preceding claims, wherein the provided plug comprises at least one reinforcement element (100) with opposite segments (100a, 100a') which lie at opposing sides of the plant insertion recess (3),
wherein, during the step of pressing of the plug (1) into the container (9), the reinforcement element (100) gets deformed from a first towards a second position together with the inwards compressing of the press sections (5), in which second position the opposite segments (100a, 100a') come to lie closer towards each other compared to the first position, in particular wherein, during the step of pressing of the plug (1) into the container (9), the reinforcement element (100) gets plastically deformed or locked such that the element (100) is able to substantially maintain its second position after having been deformed thereto.

6. Method according to one of the preceding claims, wherein the seed or lower plant part (160) is pre-placed in an auxiliary organ (161) that together get positioned inside the plant insertion recess (162), and/or
wherein, during the step of positioning the seed or a lower part of the plant inside the plant insertion recess (181) and/or during the step of pressing of the plug (180) into the container, a temporary blocking organ (184) that extends at least partly inside the recess, gets removed or destructed.

7. Assembly of a pre-shaped substrate plug (1) and a container (9), in particular for use in the method according to one of the preceding claims, in which the plug (1) is equipped with a substantially vertically extending plant insertion recess (3) that opens out towards an upper surface (4) of the plug (1),
**characterized in that,**
the plug (1) further comprises one or more press sections (5) sideways of the plant insertion recess (3), wherein outer wall dimensions (d1) of the press sections (5) are larger than inner wall dimensions (Dc) of corresponding parts of the container (9).

8. Assembly according to claim 7, wherein differences between the outer wall dimensions (d1) of the press sections (5) and the inner wall dimensions (Dc) of the corresponding parts of the container (9) are equal to or larger than thicknesses of the plant insertion recess (3) to be decreased, in particular at least 3 mm larger, and/or
wherein the plant insertion recess (3) has varying thicknesses over its height and/or width, and/or
wherein the press sections (5) are delimited by downwards tapering outer walls.

9. Assembly according to one of the preceding claims 7-8, wherein the plug (1) comprises an upper and lower plug part, wherein the press sections (5) extend along the upper plug part, and wherein the lower plug part has outer wall dimensions which are equal to or smaller than inner wall dimensions of a corresponding lower part of the container (9), and/or
wherein the container (90) delimits a space with a shape such that the plug (92) fits with the press sections (93) in a non-compressed state therein in a first rotational position and that the plug (92) fits with the press sections (93) in a compressed state therein in a second rotational position which corresponds to the insertion position.

10. Assembly according to one of the preceding claims 7-9, wherein the plant insertion recess (51, 71, 81) extends over the entire width and height of an upper plug part (50a, 70a, 80a), and wherein segments of the upper plug part (50a, 70a, 80a) lying on opposite sides of the plant insertion recess (51, 71, 81) are hingedly connected with each other by means of a lower plug part (50b, 70b, 80b).

11. Assembly according to one of the preceding claims 7-10, wherein the press sections (5) extends at least over the height of the plant insertion recess (3), and/or
wherein the substrate plug (1) including its press sections (5) is made out of a compressible substrate material.

12. Assembly according to one of the preceding claims 7-11, wherein the provided plug (1) comprises at least one reinforcement element (100) with opposite segments (100a, 100a') which lie at opposing sides of the plant insertion recess (3), such that, during a step of pressing of the plug (1) to fit into the container (9), the reinforcement element (100) gets deformed from a first towards a second position together with an inwards compressing of the press sections (5), in which second position the opposite segments (100a, 100a') come to lie closer towards each other compared to the first position.

13. Assembly according to claim 12, wherein the reinforcement element (100) has a V- or U-shape, with upwardly projecting legs of the V- or U-shape being formed by the opposite segments (100a, 100a'), and/or
wherein the opposite segments (100a, 100a') extend over substantially the entire height of the plant insertion recess (62, 71, 81), and/or
wherein the reinforcement element (100) has at least partly been connected to or embedded inside substrate material of the plug (1), and/or
wherein the reinforcement element (100) is at least partly made out of a plastically deformable material, in particular metal, such that it is able to maintain the opposite segments (100a, 100a') in the second position in which they lie closer to each other after the plug (1) has been pressed to fit into the container (9), and/or
wherein the reinforcement element (100) comprises a locking mechanism between its opposite segments, such that it is able to maintain the opposite segments (100a, 100a') in the second position in which they lie closer to each other after the plug (1) has been pressed to fit into the container (9).

14. Assembly according to one of the preceding claims 7-13 wherein a temporary blocking organ (184) is provided that extends at least partly inside the recess (181), and/or wherein two or more of the plant insertion recesses (171) are provided.

15. Pre-shaped substrate plug (1) for use in the method and assembly according to one of the preceding claims.

## Patentansprüche

1. Verfahren zum Auspflanzen eines Pflanzensaatguts oder einer Pflanze (8), insbesondere eines Setzlings, eines Stecklings oder einer Pflanzengewebekultur, umfassend die Schritte:
- Vorsehen eines vorgeformten Substratstopfens (1), welcher mit einer sich im Wesentlichen vertikal erstreckenden Pflanzeneinsetzausnehmung (3) ausgestattet ist, die sich zu einer oberen Oberfläche (4) des Stopfens (1) hin öffnet;
- Bereitstellen eines Behälters (9), in den der Stopfen (1) passt;
- Positionieren des Saatguts oder eines unteren Teils der Pflanze (8) in der Pflanzeneinsetzausnehmung (3); und
- Platzieren des Stopfens (1) in einer Einsetzposition in den Behälter (9),
**dadurch gekennzeichnet, dass**
der vorgesehene Stopfen (1) einen oder mehrere Pressabschnitte (5) seitlich der Pflanzeneinsetzausnehmung (3) aufweist, wobei äußere Wandabmessungen (d1) der Pressabschnitte (5) in der Einsetzposition größer sind als Innenwandabmessungen (Dc) der entsprechenden Teile des Behälters (9), und dass während des Schritts des Einsetzens des Stopfens (1) in die Einsetzposition in den Behälter (9) ein Pressen des Stopfens (1) in den Behälter (9) durchgeführt wird, damit die Pressabschnitte (5) in die entsprechenden Teile des Behälters (9) passen, während die Pressabschnitte (5) in seitlicher Richtung nach innen zusammengedrückt und die Pflanzeneinsetzausnehmung (3) um das Saatgut oder den unteren Pflanzenteil zumindest teilweise verkleinert wird.

2. Verfahren nach Anspruch 1, wobei der Schritt des Positionierens des Saatguts oder des unteren Pflanzenteils innerhalb der Pflanzeneinsetzausnehmung (3) ein Abwärtsbewegen des Saatguts oder der Pflanze (8) in die Pflanzeneinsetzausnehmung (3) umfasst, wobei die Abwärtsbewegung in einem Zug mit einer nach unten gerichteten Presswirkung (Fd) fortgesetzt wird, die auf die obere Oberfläche (4) des Stopfens (1) ausgeübt wird, um die Pressabschnitte (5) in die entsprechenden Teile des Behälters zu pressen und die Pflanzeneinsetzausnehmung (3) um das Saatgut oder den unteren Pflanzenteil zumindest teilweise zu verkleinern.

3. Verfahren nach einem der vorhergehenden Ansprüche, wobei vor dem Schritt des Positionierens des Saatguts oder des unteren Pflanzenteils innerhalb der Pflanzeneinsetzausnehmung (3) der Stopfen (1) teilweise mit einem unteren Stopfenteil in einen oberen Teil des Behälters (9) vorpositionert wird, mit dem die Pressabschnitte (5) durch die entsprechenden Teile des Behälters (9) in einem nicht komprimierten Zustand gehalten werden,
insbesondere wobei der vorgesehene Stopfen (1) Pressabschnitte (5) aufweist, die sich entlang eines oberen Stopfenteil (50a, 70a, 80a) erstrecken, und wobei während des Vorpositionierens des unteren Stopfenteil (50b, 70b, 80b) in den oberen Teil des Behälters (52, 72, 82) der obere Stopfenteil (50a, 70a, 80a), entlang dem sich die Pressabschnitte (5) erstrecken, oberhalb des oberen Teils (52, 72, 82) des Behälters (9) positioniert wird.

4. Verfahren nach einem der vorhergehenden Ansprüche, wobei der vorgesehene Behälter (90) einen Raum mit einer Form derart begrenzt, dass der Stopfen (92) mit seinen Pressabschnitten (93) darin in einem nicht komprimierten Zustand in eine erste Drehposition passt und dass der Stopfen (92) mit seinen Pressabschnitten (93) darin in einem komprimierten Zustand in einer zweiten Drehposition passt, welche der Einsetzposition entspricht,
wobei das Verfahren ferner die Schritte aufweist:
- Vorformen des Substratstopfens (92) innerhalb des Behälters (90);
- Bewegen des vorgeformten Stopfens (92) zumindest teilweise aus dem Behälter (90) heraus;
- Drehen des vorgeformten Stopfens (92) von der ersten Drehposition in die zweite Dreheinsetzposition;
- Positionieren des Saatguts oder unteren Teils der Pflanze in der Pflanzeneinsetzausnehmung (94); und
- Pressen des Stopfens (92) in der zweiten Dreheinsetzposition in den Behälter (90), während die Pressabschnitte (93) in seitlicher Richtung nach innen zusammengepresst werden und die Pflanzeneinsetzausnehmung (3) um das Saatgut oder den unteren Pflanzenteil zumindest teilweise verkleinert wird.

5. Verfahren nach einem der vorhergehenden Ansprüche, wobei der vorgesehene Stopfen mindestens ein Verstärkungselement (100) mit gegenüberliegenden Segmenten (100a, 100a') aufweist, die an gegenüberliegenden Seiten der Pflanzeneinsetzausnehmung (3) liegen,
wobei während des Schrittes des Drückens des Stopfens (1) in den Behälter (9) das Verstärkungselement (100) zusammen mit dem Einwärtspressen der Pressabschnitte (5) von einer ersten in eine zweite Position verformt wird, wobei in dieser zweiten Position die gegenüberliegenden Segmente (100a, 100a') im Vergleich zur ersten Position näher beieinander angeordnet sind,
insbesondere wobei während des Schritts des Einpressens des Stopfens (1) in den Behälter (9) das Verstärkungselement (100) plastisch verformt oder verriegelt wird, so dass das Element (100), nachdem es daran verformt wurde, seine zweite Position im Wesentlichen beibehalten kann.

6. Verfahren nach einem der vorhergehenden Ansprüche, bei dem das Saatgut oder der untere Pflanzenteil (160) in einem Hilfsorgan (161) vorpositioniert wird, die zusammen innerhalb der Pflanzeneinsetzausnehmung (162) positioniert werden und/oder
wobei während des Schritts des Positionierens des Saatgutes oder eines unteren Pflanzenteils innerhalb der Pflanzeneinsetzausnehmung (181) und/oder während des Schritts des Einpressens des Stopfens (180) in den Behälter ein temporäres Blockierorgan (184), das sich zumindest teilweise innerhalb der Ausnehmung erstreckt, entfernt oder zerstört wird.

7. Anordnung eines vorgeformten Substratstopfens (1) und eines Behälters (9), insbesondere zur Verwendung in dem Verfahren nach einem der vorhergehenden Ansprüche, bei dem der Stopfen (1) mit einer sich im Wesentlichen vertikal erstreckenden Pflanzeneinsetzausnehmung (3) ausgestattet ist, die sich zu einer oberen Oberfläche (4) des Stopfens (1) hin öffnet,
**dadurch gekennzeichnet, dass**
der Stopfen (1) ferner einen oder mehrere Pressabschnitte (5) seitlich der Pflanzeneinsetzausnehmung (3) aufweist, wobei äußere Wandabmessungen (d1) der Pressabschnitte (5) größer sind als innere Wandabmessungen (Dc) der entsprechenden Teile des Behälters (9).

8. Anordnung nach Anspruch 7, wobei Differenzen zwischen den Außenwandabmessungen (d1) der Pressabschnitte (5) und den inneren Wandabmessungen (Dc) der entsprechenden Teile des Behälters (9) gleich oder größer sind als die Dicken der zu verkleinernden Pflanzeneinsetzausnehmung (3), insbesondere mindestens 3 mm größer und/oder
wobei die Pressabschnitte (5) durch nach unten verjüngende Außenwände begrenzt sind.

9. Anordnung nach einem der vorhergehenden Ansprüche 7-8, wobei der Stopfen (1) ein oberes und unteres Stopfenteil umfasst, wobei sich die Pressabschnitte (5) entlang des oberen Stopfenteils erstrecken, und wobei das untere Stopfenteil Außenwandabmessungen aufweist, die gleich oder kleiner sind als Innenwandabmessungen eines entsprechenden unteren Teils des Behälters (9) und/oder
wobei der Behälter (90) einen Raum mit einer Form derart begrenzt, dass der Stopfen (92) mit den Pressabschnitten (93) in einem nicht komprimierten Zustand darin in einer ersten Drehposition passt und dass der Stopfen (92) mit den Pressabschnitten (93) in einem komprimierten Zustand darin in einer zweiten Drehposition passt, die der Einsetzposition entspricht.

10. Anordnung nach einem der vorhergehenden Ansprüche 7-9, wobei sich die Pflanzeneinsetzausnehmung (51, 71, 81) über die gesamte Breite und Höhe eines oberen Stopfenteils (50a, 70a, 80a) erstreckt und wobei Segmente des oberen Stopfenteils (50a, 70a, 80a), die auf gegenüberliegenden Seiten der Pflanzeneinsetzausnehmung (51, 71, 81) liegen, mittels eines unteren Stopfenteils (50b, 70b, 80b) gelenkig miteinander verbunden sind.

11. Anordnung nach einem der vorhergehenden Ansprüche 7-10, wobei sich die Pressabschnitte (5) zumindest über die Höhe der Pflanzeneinsetzausnehmung (3) erstrecken und/oder wobei der Substratstopfen (1) einschließlich seiner Pressabschnitte (5) aus einem komprimierbaren Substratmaterial hergestellt ist.

12. Anordnung nach einem der vorhergehenden Ansprüche 7-11, wobei der vorgesehene Stopfen (1) mindestens ein Verstärkungselement (100) mit gegenüberliegenden Segmenten (100a, 100a') aufweist, die an gegenüberliegenden Seiten der Pflanzeneinsetzausnehmung (3) liegen, so dass das Verstärkungselement (100) während eines Schritts des Einpressens des Stopfens (1) in den Behälter (9) das Verstärkungselement (100) von einer ersten zu einer zweiten Position zusammen mit einer nach innen gerichteten Komprimierung der Pressabschnitte (5) deformiert wird, wobei in der zweiten Position die gegenüberliegenden Segmente (100a, 100a') im Vergleich zur ersten Position näher beieinander angeordnet sind.

13. Anordnung nach Anspruch 12, wobei das Verstärkungselement (100) eine V- oder U-Form aufweist, wobei nach oben ragende Schenkel der V- oder U-Form von den gegenüberliegenden Segmenten (100a, 100a') gebildet sind und/oder wobei sich die gegenüberliegenden Segmente (100a, 100a ') im Wesentlichen über die gesamte Höhe der Pflanzeneinsetzausnehmung (62, 71, 81) erstrecken und/oder
wobei das Verstärkungselement (100) zumindest teilweise mit dem Substratmaterial des Stopfens (1) verbunden oder darin eingebettet ist und/oder wobei das Verstärkungselement (100) zumindest teilweise aus einem plastisch verformbaren Material besteht, insbesondere aus Metall, so dass es in der Lage ist, die gegenüberliegenden Segmente (100a, 100a') in der zweiten Position zu halten, in der sie näher beieinander angeordnet sind, nachdem der Stopfen (1) in den Behälter (9) gepresst wurde und/oder
wobei das Verstärkungselement (100) einen Verriegelungsmechanismus zwischen seinen gegenüberliegenden Segmenten aufweist, so dass es in der Lage ist, die gegenüberliegenden Segmente (100a, 100a') in der zweiten Position zu halten, in der sie näher beieinander angeordnet sind, nachdem der Stopfen (1) in den Behälter (9) gepresst wurde.

14. Anordnung nach einem der vorhergehenden Ansprüche 7-13, wobei ein temporäres Blockierorgan (184) vorgesehen ist, das sich wenigstens teilweise innerhalb der Ausnehmung (181) erstreckt und/oder wobei zwei oder mehr der Pflanzeneinsetzausnehmungen (171) vorgesehen sind.

15. Vorgeformter Substratstopfen (1) zur Verwendung in dem Verfahren und Anordnung nach einem der vorhergehenden Ansprüche.

## Revendications

1. Procédé pour planter une graine pour une plante ou une plante (8), en particulier un semis, une bouture ou une plante de culture tissulaire, comprenant les étapes consistant à :
prévoir une motte de substrat préformée (1) qui est équipée avec un évidement d'insertion de plante (3) s'étendant verticalement qui s'ouvre vers une surface supérieure (4) de la motte (1) ;
prévoir un contenant (9) pour y faire entrer la motte (1) ;
positionner la graine ou une partie inférieure de la plante (8) à l'intérieur de l'évidement d'insertion de plante (3) ; et
placer la motte (1) dans une position d'insertion dans le contenant (9),
**caractérisé en ce que** :
la motte (1) prévue comprend une ou plusieurs sections de pression (5) sur le côté de l'évidement d'insertion de plante (3), dans lequel les dimensions de paroi externe (d1) des sections de pression (5), dans la position d'insertion, sont supérieures aux dimensions de paroi interne (Dc) des parties correspondantes du contenant (9), et
**en ce que** pendant l'étape consistant à placer la motte (1) dans la position d'insertion dans le contenant (9), une pression de la motte (1) dans le contenant (9) est réalisée pour que lesdites sections de pression (5) rentrent à l'intérieur des parties correspondantes du contenant (9) alors que lesdites sections de pression (5) appuient vers l'intérieur dans une direction de biais et diminuent au moins partiellement l'évidement d'insertion de plante (3) autour de la graine ou de la partie de plante inférieure.

2. Procédé selon la revendication 1, dans lequel l'étape consistant à positionner la graine ou la partie de plante inférieure à l'intérieur de l'évidement d'insertion de plante (3) comprend un déplacement vers le bas de la graine ou de la plante (8) dans l'évidement d'insertion de plante (3), lequel déplacement vers le bas est continu en une seule fois avec une action de pression descendante (Fd) exercée sur la surface supérieure (4) de la motte (1) pour comprimer les sections de pression (5) dans les parties de contenant correspondantes et diminuer au moins partiellement l'évidement d'insertion de plante (3) autour de la graine ou de la partie de plante inférieure.

3. Procédé selon l'une des revendications précédentes, dans lequel précédant l'étape consistant à positionner la graine ou la partie de plante inférieure à l'intérieur de l'évidement d'insertion de plante (3), la motte (1) est placée au préalable partiellement avec une partie de motte inférieure dans une partie supérieure du contenant (9), avec laquelle les sections de pression (5) sont supportées dans un état non comprimé par les parties correspondantes du contenant (9),
en particulier, dans lequel la motte (1) prévue a lesdites sections de pression (5) qui s'étendent le long d'une partie de motte supérieure (50a, 70a, 80a), et dans lequel pendant la mise en place préalable de la partie de motte inférieure (50b, 70b, 80b) dans la partie supérieure du contenant (52, 72, 82), la partie de motte supérieure (50a, 70a, 80a), le long de laquelle lesdites sections de pression (5) s'étendent, est positionnée au-dessus de ladite partie supérieure (52, 72, 82) du récipient (9) .

4. Procédé selon l'une des revendications précédentes, dans lequel le contenant (90) prévu délimite un espace avec une forme de sorte que la motte (92) rentre avec ses sections de pression (93) dans un état non comprimé à l'intérieur de ce dernier, dans une première position de rotation et en ce que la motte (92) rentre avec ses sections de pression (93) dans un état comprimé à l'intérieur de ce dernier, dans une seconde position de rotation qui correspond à la position d'insertion,
le procédé comprenant en outre les étapes consistant à :
préformer la motte de substrat (92) à l'intérieur du contenant (90) ;
déplacer la motte (92) préformée au moins partiellement hors du contenant (90) ;
faire tourner la motte (92) préformée de la première position de rotation à la seconde position d'insertion rotative ;
positionner la graine ou la partie inférieure de la plante à l'intérieur de l'évidement d'insertion de plante (94) ; et
comprimer la motte (92) dans la seconde position d'insertion rotative dans le contenant (90) alors que lesdites sections de pression (93) appuient vers l'intérieur dans la direction en biais et diminuent au moins partiellement l'évidement d'insertion de plant (94) autour de la graine ou de la partie de plante inférieure.

5. Procédé selon l'une des revendications précédentes, dans lequel la motte prévue comprend au moins un élément de renforcement (100) avec des segments opposés (100a, 100a') qui se trouvent sur les côtés opposés de l'évidement d'insertion de plante (3),
dans lequel, pendant l'étape consistant à comprimer la motte (1) dans le contenant (9), l'élément de renforcement (100) se déforme d'une première vers une seconde position conjointement avec la compression vers l'intérieur des sections de pression (5), dans laquelle seconde position, les segments opposés (100a, 100a') se rapprochent l'un vers l'autre par rapport à la première position, en particulier, dans lequel, pendant l'étape consistant à comprimer la motte (1) dans le contenant (9), l'élément de renforcement (100) se déforme plastiquement ou se verrouille de sorte que l'élément (100) peut maintenir sensiblement sa seconde position après avoir été déformé.

6. Procédé selon l'une des revendications précédentes, dans lequel la graine ou la partie de plante inférieure (160) est placée au préalable dans un organe auxiliaire (161), qui sont positionnés ensemble à l'intérieur de l'évidement d'insertion de plante (162), et/ou
dans lequel, pendant l'étape consistant à positionner la graine ou une partie inférieure de la plante à l'intérieur de l'évidement d'insertion de plante (181) et/ou pendant l'étape consistant à comprimer la motte (180) dans le contenant, un organe de blocage temporaire (184) qui s'étend au moins partiellement à l'intérieur de l'évidement, est retiré ou détruit.

7. Ensemble d'une motte de substrat (1) préformée et d'un contenant (9), en particulier destiné à être utilisé dans le procédé selon l'une des revendications précédentes, dans lequel la motte (1) est équipée avec un évidement d'insertion de plante (3) s'étendant sensiblement verticalement qui s'ouvre vers une surface supérieure (4) de la motte (1),
**caractérisé en ce que** :
la motte (1) comprend en outre une ou plusieurs sections de pression (5) de biais de l'évidement d'insertion de plante (3), dans lequel les dimensions de paroi externe (d1) des sections de pression (5) sont supérieures aux dimensions de paroi interne (Dc) des parties correspondantes du contenant (9).

8. Ensemble selon la revendication 7, dans lequel les différences entre les dimensions de paroi externe (d1) des sections de pression (5) et les dimensions de paroi interne (Dc) des parties correspondantes du récipient (9) sont égales ou supérieures aux épaisseurs de l'évidement d'insertion de plante (3) à réduire, en particulier au moins 3 mm plus grandes et/ou
dans lequel l'évidement d'insertion de plante (3) a des épaisseurs variables sur sa hauteur et/ou largeur, et/ou
dans lequel les sections de pression (5) sont délimitées par des parois externes se rétrécissant progressivement vers le bas.

9. Ensemble selon l'une des revendications 7 à 8, dans lequel la motte (1) comprend une partie de motte supérieure et inférieure, dans lequel les sections de pression (5) s'étendent le long de la partie de motte supérieure et dans lequel la partie de motte inférieure a des dimensions de paroi externe qui sont égales ou inférieures aux dimensions de paroi interne d'une partie inférieure correspondante du contenant (9), et/ou
dans lequel le contenant (90) délimite un espace avec une forme de sorte que la motte (92) rentre avec les sections de pression (93) dans un état non comprimé à l'intérieur de cette dernière dans une première position de rotation et en ce que la motte (92) rentre avec les sections de pression (93) dans un état comprimé à l'intérieur de cette dernière dans une seconde position de rotation qui correspond à la position d'insertion.

10. Ensemble selon l'une des revendications 7 à 9, dans lequel l'évidement d'insertion de plante (51, 71, 87) s'étend sur toute la largeur et la hauteur d'une partie de motte supérieure (50a, 70a, 80a), et dans lequel les segments de la partie de motte supérieure (50a, 70a, 80a) se trouvant sur les côtés opposés de l'évidement d'insertion de plante (51, 71, 81) sont raccordés par articulation entre eux au moyen d'une partie de motte inférieure (50b, 70b, 80b).

11. Ensemble selon l'une des revendications 7 à 10, dans lequel les sections de pression (5) s'étendent au moins sur la hauteur de l'évidement d'insertion de plante (3), et/ou
dans lequel la motte de substrat (1) comprenant ses sections de pression (5), est composée d'un matériau de substrat compressible.

12. Ensemble selon l'une des revendications 7 à 11, dans lequel la motte (1) prévue comprend au moins un élément de renforcement (100) avec des segments (100a, 100a') opposés qui se trouvent sur les côtés opposés de l'évidement d'insertion de plante (3), de sorte que, pendant une étape de pression de la motte (1) pour rentrer dans le contenant (9), l'élément de renforcement (100) se déforme d'une première vers une seconde position conjointement avec une compression vers l'avant des sections de pression (5), dans laquelle seconde position, les segments opposés (100a, 100a') se rapprochent l'un de l'autre par rapport à la première position.

13. Ensemble selon la revendication 12, dans lequel l'élément de renforcement (100) a une forme de V ou de U, avec les pattes en saillie vers le haut de la forme de V ou de U qui sont formées par les segments opposés (100a, 100a'), et/ou
dans lequel les segments (100a, 100a') opposés s'étendent sensiblement sur toute la hauteur de l'évidement d'insertion de plante (62, 71, 81), et/ou
dans lequel l'élément de renforcement (100) a été partiellement raccordé à ou encastré à l'intérieur du matériau de substrat de la motte (1), et/ou
dans lequel l'élément de renforcement (100) est au moins partiellement composé de matériau plastiquement déformable, en particulier du métal, de sorte qu'il peut maintenir les segments opposés (100a, 100a') dans la seconde position dans laquelle ils se rapprochent l'un de l'autre après que la motte (1) a été comprimée pour rentrer dans le contenant (9), et/ou
dans lequel l'élément de renforcement (100) comprend un mécanisme de verrouillage entre ses segments opposés, de sorte qu'il peut maintenir les segments opposés (100a, 100a') dans la seconde position dans laquelle ils se rapprochent l'un de l'autre, après que la motte (1) a été comprimée pour rentrer dans le contenant (9).

14. Ensemble selon l'une des revendications 7 à 13, dans lequel on prévoit un organe de blocage temporaire (184) qui s'étend au moins partiellement à l'intérieur de l'évidement (181), et/ou dans lequel deux évidements d'insertion de plante (171) ou plus sont prévus.

15. Motte de substrat (1) préformée destinée à être utilisée dans le procédé et l'ensemble selon l'une des revendications précédentes.
